# EUROPEAN PATENT APPLICATION

(11) **EP 1 708 320 A1**
(43) Date of publication of application: **04.10.2006**
(21) Application number: 06075111.2
(22) Date of filing: 17.01.2006
(51) Int. Cl.: H01S 3/10, H01S 3/102, H01S 3/06

(54) **Laser trim pump**

(30) Priority: 29.03.2005 US 94734
(71) Applicant: Northrop Grumman Corporation, Los Angeles, CA 90067 (US)
(72) Inventor: Goodno, Gregory D., Los Angeles, 90045 CA (US); Epp, Paul T., Los Angeles, 90266 California (US); Ho, James G., Los Angeles 90066 California (US)
(74) Representative: Martin, Philip John

(57) **Abstract**

A technique for compensating for the effects of thermo-optic distortions in a solid state laser gain medium (10), and reducing optical path differences in the laser. A diode array (16) coupled to the laser gain medium (10) is selectively modulated to provide pump power, the intensity of which varies across the aperture of the gain medium (10). The modulated diode array (16) has a spatial power profile that is selected to compensate for thermal distortions arising from various causes. The modulated diode array (16) may be one of several diode arrays (12,16) providing pump power to the laser gain medium (10), or may be an auxiliary diode array (16) with the sole purpose of providing compensating power input with a selected profile across the aperture of the gain medium (10).

## Description

### BACKGROUND OF THE INVENTION

This invention relates generally to high power solid state lasers and, more particularly, to techniques for controlling thermo-optic distortions in high power solid state lasers. Solid state lasers that generate relatively high output powers are known in the art. For example, US Patent No. 6,094,297, issued in the names of Hagop Injeyan et al., discloses a zig-zag slab laser that is end pumped, using pump beams reflected from end facets of a slab of lasing material. An input beam is launched into one of the end facets and is amplified as it progresses through the slab, making multiple internal reflections from parallel slab surfaces. The disclosure of US Patent No. 6,094,297 is incorporated by reference into this description.

The basic slab laser gain module structure of the type disclosed in US Patent No. 6,094,297 can be scaled up In size and power without increasing the power density or thermal load of the device, thereby providing higher output powers. Unfortunately, however, the output beam quality obtained from higher power gain modules of this type is limited by spatially non-uniform optical path differences (OPD) across the aperture of the slab. Optical path differences can arise from any or all of a number of factors, including non-uniformities in heat loads generated by absorption of light from pump diodes, non-uniformities in thermal contact between the slab and cooling devices, non-uniformities in the manner of extraction of stored power from the slab, warping of the slab edges, and non-uniformities in scattering of fluorescence near the slab edges. Some of these factors are predictable and can, therefore, be effectively modeled and accounted for in the laser design. Other factors, however, arise from unpredictable variations in slabs and in pump diode arrays, or from component aging and the process of assembling the optical components of the laser.

All of these effects combine to produce, from a gain module under full pumping conditions, a typical OPD on the order of 10 microns (micrometers). Since most laser systems require multiple passes through the gain module to achieve high power, the total OPD can exceed the range of typical methods of wavefront correction, such as phase conjugation and adaptive optics. Accordingly, there is a need to reduce the OPD from a conduction cooled end pumped slab gain module to levels that are compatible with phase conjugation and adaptive optics. This typically means reducing the OPD to approximately 1 micron per pass of the gain module. The present invention addresses this need.

Furthermore, it is common problem for OPD to be imposed upon the amplified laser beam from components of a laser system other than the gain medium, such as distorted lenses or mirrors. The trim pumping technique can be used to impose a conjugate OPD upon the laser gain medium such that the OPD imposed on the amplified laser beam upon traversal of the gain medium cancels the OPD imposed by the other components. This can increase the beam quality and brightness of a solid state laser system.

### SUMMARY OF THE INVENTION

The present invention resides in a solid state laser system in which optical path differences due to thermo-optical effects are reduced to an acceptable level. Briefly, and in general terms, the laser system of the invention comprises a solid state gain medium into which an input beam is launched and from which an amplified output beam is emitted; one or more arrays of light sources to provide pump power coupled into the solid state gain medium; and means for spatially modulating pump power coupled into the solid state gain medium, to compensate for thermal non-uniformities in the gain medium and to minimize optical path differences in the gain medium.

In one disclosed embodiment of the invention, the one or more arrays of light sources comprise a main laser diode array and an auxiliary laser diode array. The means for spatially modulating pump power comprises means for modulating the light output from the auxiliary array. This modulation may be effected by means of at least one beam deflector, for deflecting output from at least part of the auxiliary array. Alternatively, the means for modulating the light output from the auxiliary array of light sources may comprise a set of individual controls for modulating light output from selected portions of the auxiliary array.

In another disclosed embodiment of the invention, the one or more arrays of light sources comprises several main arrays. The means for spatially modulating pump power comprises means for selectively deflecting the light output from selected portions of one of the main arrays. The means for selectively deflecting the light output may take the form of a plurality of optical rods or fibers, movable to deflect light output from the selected portions of one of the main arrays.

In the disclosed embodiments of the invention, the solid state gain medium is a slab of such material, and the arrays of light sources laser diode arrays.

The invention may also be defined as a method. for reducing thermo-optic effects in a high power solid state laser. Briefly, the method comprises the steps of launching an input beam into a solid state gain medium; amplifying the input beam in the solid state gain medium; outputting the amplified beam from an aperture in the solid state gain medium; coupling pump power into the solid state gain medium from at least one array of laser diodes; detecting optical path differences across the aperture of the solid state gain medium; and selectively modulating the amount of pump power coupled to the solid state laser, to compensate for the detected optical path differences.

The trim pumping technique can also be used to compensate optical aberrations that are already present on the input beam or are imposed on the amplified beam upon transmission through optical elements following the gain medium. In this manner, the gain medium with a laser trim pump functions as an adaptive optic. In other words, the trim pump is not limited only to correcting aberrations arising from the gain medium; it can also correct aberrations from other sources.

It will be appreciated from the foregoing summary that the present invention represents a significant advance in the field of high power solid state lasers. In particular, the invention provides a technique for minimizing optical path differences to an acceptable level, and thereby allowing higher power beams to be generated at an acceptably high beam quality. More generally, this invention provides a technique to correct or pre-compensate optical aberrations of laser, beams traversing the gain medium, regardless of the origin of these aberrations. Other aspects and advantages of the invention will become apparent from the following more detailed description, taken in conjunction with the accompanying drawings.

### BRIEF DESCRIPTION OF THE DRAWINGS

FIGS. 1A and 1B together depict a solid state laser system In accordance with the present invention.

FIGS. 2A and 2B together depict a solid state laser system in accordance with an alternate embodiment of the present Invention.

FIG. 3 depicts a solid state laser system in accordance with another alternate embodiment of the present invention.

FIG. 4 is a graphical reproduction of an interferogram showing the effect of optical path differences before (upper view) and after (lower view) compensation in accordance with the present invention.

### DETAILED DESCRIPTION OF THE INVENTION

As shown in the drawings for purposes of illustration, the present invention is concerned with techniques for reducing thermo-optic distortions In high power solid state lasers. Scaling of slab lasers to high powers has been limited, as a practical matter, by an inability to obtain high power outputs with a desirably high beam quality because thermal non-uniformities in the slab produce optical path differences (OPD) across the slab aperture and these differences have a negative impact on beam quality. Control of the thermal profile of the slab by means of tailored cooling or tailored edge heat deposition has not provided a satisfactory solution to the OPD problem.

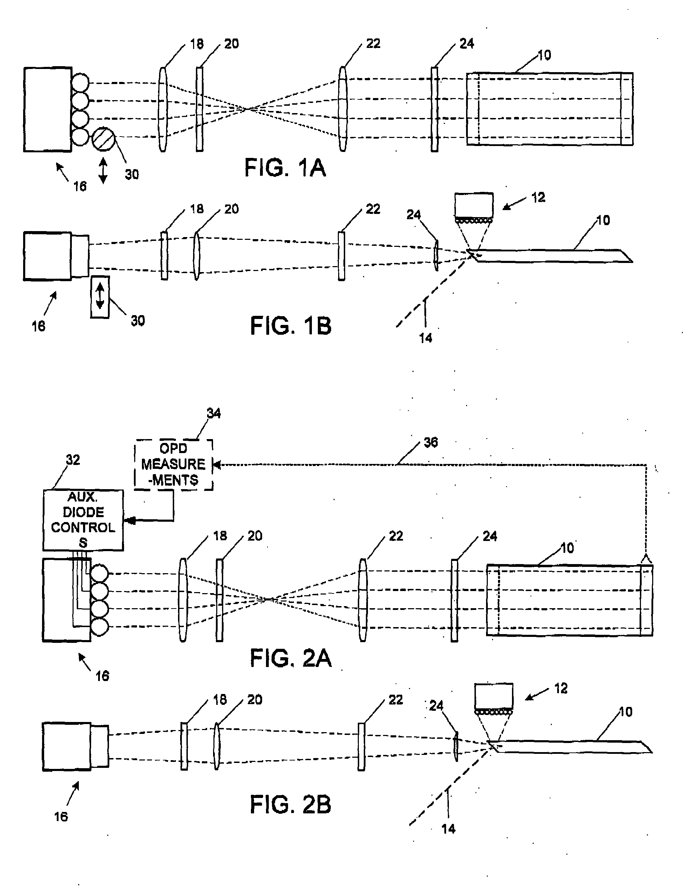

In accordance with the present invention, thermal non-uniformities in a solid state gain medium are reduced or eliminated by modulating the spatial profile of pump diode light, to control where heat is deposited into the laser material. FIGS. 1A and 1B depict one implementation of the invention. FIG. 1A is a side view and FIG 1B is a top view, respectively, of a laser that includes a slab 10 of solid state lasing material, such as rare earth doped yttrium-aluminum-garnet (YAG). As shown in FIG. 1B, a main diode array 12 has its output directed into one end of the slab 10. This pump energy may, as in the system of Patent No.6,094,297, be reflected from an end facet of the slab 10, and there may be an additional diode array (not shown) launching pump energy into the other end facet of the slab. At least one input light beam 14 is also launched into an end facet of the slab 10, as indicated in FIG. 1B, this input light beam is amplified in the slab 10 and emerges from an aperture formed by the opposite end facet. The amplified beam may, in some applications, make multiple passes through the gain medium of the slab.

For a variety of reasons discussed above, the slab 10 is subject to variations in temperature and these thermal variations give rise to optical distortions. It is of critical importance to beam quality obtained from the laser that the optical path differences (OPD) across the clear aperture of the slab 10 be kept below or close to a level of approximately 1 micron per pass through the slab. OPDs of this order of magnitude are correctable using conventional techniques of phase conjugation and adaptive optics. Urifortunately, as slab lasers of this type are scaled up in power the OPDs are more typically on the order of 10 microns per pass. Therefore, this thermo-optic OPD phenomenon effectively limits the beam quality obtainable from solid state lasers.

In accordance with the invention, the OPD profile across the clear aperture of the laser slab 10 is tailored to be more uniform. One approach to tailoring the OPD profile is illustrated in FIGS. 1A and 1B and includes the use of an auxiliary diode array 16. Outputs from the auxiliary array 16 are focused by lenses 18, 20, 22 and 24 and then launched into an end facet of the slab 10. As particularly shown in FIG. 1A, light from diodes of the auxiliary array 16 is focused and then condensed before launching into the slab 10 as a set of generally parallel beams. As particularly shown in FIG. 1B, as viewed along an orthogonal axis, the same optical outputs from auxiliary array 16 are focused into a narrower beam for launching into the inclined end facet of the slab 10. It will be understood that the slab 10 is relatively thin in one dimension, for example approximately 2 mm in thickness, but may be as wide as, for example, 20 mm in the orthogonal direction. In this illustrative embodiment of the invention, the auxiliary array 16 is a 25-bar array, only four bars of which are shown in FIG. 1A. Output from the array 16 is image relayed in the fast axis (as shown in FiG. 1A) onto the end facet of the slab 10, to fill the 20-mm slab clear aperture. In effect, each bar of the auxiliary array 16 may be thought of as being mapped into a corresponding portion of the slab aperture.

The embodiment of FIGS. 1A and 1B also includes a beam blocker 30, in the form or at least one rod lens that is movable to block light from one or more of the diode bars of the auxiliary array 16. The beam blocker 30 in this embodiment does not actually block light from the array 16 but deflects it such that much less light from the affected portion of the array reaches the slab 10. The beam blocker 30 can be moved to a location that "blocks" (deflects) light from a selected bar or bars of the auxiliary array 16, thereby modulating light from the auxiliary array 16. The function of the modulated auxiliary array 16 is to introduce OPD selectively into the slab 10, effectively to cancel OPD induced by the main pump arrays 12 or by other components in the laser system. Depositing more pump light in a given section of the slab clear aperture will increase the local temperature due to the increased volumetric heat load. This increases the optical path length in that section because of the temperature dependence of the refractive index and because of thermal expansion of the slab material. Similarly, decreasing the pump light absorbed in a given slab section will reduce the effective path length.

FIGS. 2A and 2B depict an embodiment similar to that shown in FIGS. 1A and 1B, except that there is no beam blocker 30 in FIGS. 2A and 2B. Instead, each diode bar in the auxiliary array 16 is coupled to individual auxiliary diode controls 32, which allow the individual diode bars of the auxiliary array 16 to be separately modulated. Thus, each bar in the auxiliary array 16 can be modulated to emit a greater or lesser optical power than the other bars In the array. The effect, as in the FIGS. 1A and 1B embodiment, is to provide OPD control over individual sections of the slab 10, and to effect compensation for OPD caused by the main diode array 12.

Similarly to Fig 2A, the auxiliary pump array 16 may consist of an array of fiber-coupled lasers or laser diodes arranged in an equivalent manner to deposit power In spatially localized regions in the slab. The use of fiber-coupled auxiliary pumps has some advantages in that the high beam quality obtainable from commerically available fiber-coupled laser diodes can eliminate the need for imaging lenses 18, 20, 22, 24, which reduces volume and simplifies the design, assembly, and parts count. Furthemore, as only the output ends of the fiber coupled auxiliary lasers need to be located in close proximity to the gain module, the auxiliary lasers themselves can be located remotely from the gain module which can provide further advantages for purposes of thermal management and packaging.

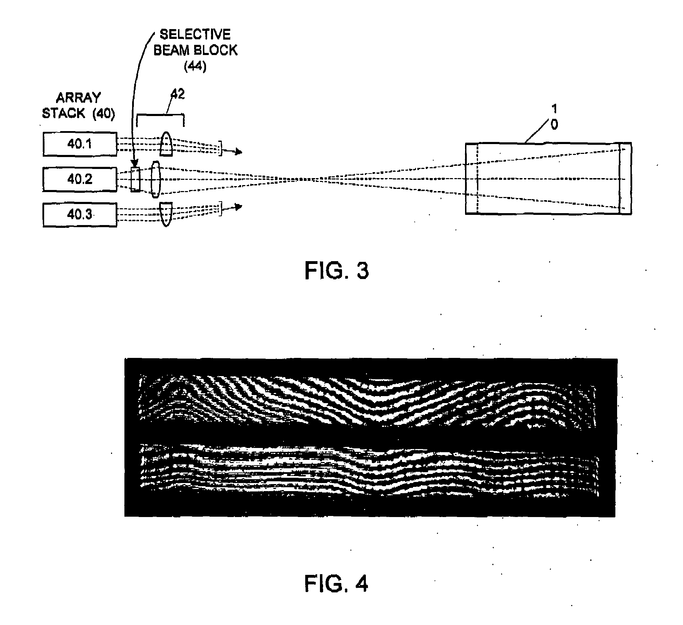

As shown diagrammatically in FIG. 2A, the auxiliary diode controls 32 are adjusted in accordance with information obtained from OPD measurements 34. As indicated by the broken line 36, these OPD measurements may be taken at the output facet of the slab 10, using conventional interferometric techniques. For example, a probe beam having a frequency or angle of incidence different from that of the input beam 14 may also be input to the slab 10, and then output from the slab and compared with a reference beam of the same frequency as the probe beam. The probe beam is subject to the same OPD effects as the amplified beam as it is propagated through the slab, and these OPD effects are quantified when the output probe beam is compared with the reference beam. In this convention technique, the output probe beam and the reference beam are directed onto an optical sensor that produces an interferogram similar to that shown in FIG. 4. The upper view in FIG. 4 indicates significant OPD effects across the slab aperture, which is represented by the bright rectangular window in the drawing. The irregular and wavy lines in the fringe pattern of the interferogram indicate OPD variations across the aperture. The lower view in FIG. 4 depicts the same interference pattern after compensation by modulation of the auxiliary light input profile. The wavy lines in the lower pattern have been rendered nearly parallel by the technique of the invention.

OPD information can also be obtained by measuring a low-power sample of the main amplified beam itself. This measurement can be performed by generating a low-power replica of the amplified beam following traversal through the gain medium, typically by reflection from an uncoated or anti-reflective coated surface placed in the amplified beam path. The OPD of the low power replica can then be measured as above by interference with a phase-coherent reference beam, or via some other means of wavefront detection (e.g., a Shack-Hartmann wavefront sensor). This alternative means of recording OPD information eliminates the need for an independent probe beam, since the amplified laser beam acts as its own probe. Furthermore, if the low-power sample is taken at the output of the laser system, the measured OPD will be the net sum of all the OPD imposed on the amplified beam by every element in its path, e.g. other gain modules, mirrors, lenses, etc. These measurements provide information that can determine an appropriate conjugate OPD to impose via trim pumping onto the gain module such that the net measured OPD of the amplified beam at the output of the laser system is reduced to near zero, thus achieving higher beam quality and brightness.

Although the line 36 in FIG. 2A implies that there is a feedback loop whereby OPD measurements are fed back to control the auxiliary diode array 16, it should be understood that this feedback of information may take various forms. In its simplest form, the invention operates without continuous feedback and adjustment of the auxiliary diode array 16. Based on only occasional observations of the OPD variations across the aperture of the slab 10, the auxiliary diode controls 32 (FIG. 2A) or the beam blocker(s) 30 (FIG. 1A) are adjusted to perform OPD compensation. In a more complex form of the invention, OPD measurements may be taken on a continuous or periodic basis and fed back over line 36 to control individual diode bars in the auxiliary array 16 to provide continually adjusted compensation of the OPD profile of the slab 10.

The principles of the invention may also be practiced without use of an auxiliary diode array, as such. FiG. 3 shows an embodiment of the invention in which one array module 40.2 of an array module stack 40 is modulated to compensate for OPD effects in a laser slab 10. Three diode array modules 40.1, 40.2 and 40.3 all contribute light output to pump the gain medium slab 10 through an end face. Thus, the module stack 40 is the "main" diode module of the laser. The outputs from the array stack 40 are coupled through array optics 42 for launching into the end face of the slab 10. The center array 40.2 of the stack 40 is subject to blocking by a selective beam block module 44. This may, for example, take the form of an array of stripped optical fibers, each of which can function to deflect light from one or more of the laser bars in the array 40.2, thereby modulating the diode pump light impinging on the slab 10. As in the previously described embodiments, light from the array 40.2 is modulated to compensate for OPD effects in the slab 10, caused by various other factors. It will be appreciated from FIG. 3 that the distinction between a "main" diode array and an "auxiliary" diode array, although useful for purposes of explanation of the FIGS. 1 and 2 embodiments, is not a particularly useful one in this embodiment of the invention. The common feature of the various embodiments of present invention is the ability to modulate or spatially contour light from a diode array, to produce an OPD effect that compensates for OPD arising from other causes. This modulation may be effected in an auxiliary diode array or in a main diode array.

It will be appreciated from the foregoing that the present invention represents a significant advance in solid state lasers. In particular, the invention enables higher powers and brightness levels to be achieved by compensating for OPD effects in the laser gain medium. It will also be appreciated that although the invention has been described in detail for purposes of illustration, various modifications may be made without departing from the spirit and scope of the invention. For example, although the invention has been described in terms of its application to a slab laser, the principles of the invention may also be applied to other diode pumped solid state laser architectures, including rods, thin disks and one-dimensional waveguides. Accordingly, the invention should not be limited except as by the accompanying claims.

## Claims

1. A high power solid state laser system, comprising:
a solid state gain medium into which an input beam is launched and from which an amplified output beam is emitted;
at least one array of light sources to provide pump power coupled into the solid state gain medium; and
means for spatially modulating pump power coupled into the solid state gain medium, to compensate for optical aberrations that affect the amplified output beam.

2. A high power solid state laser system as defined in claim 1, wherein the optical aberrations are caused by thermal non-uniformities in the gain medium and the means for spatially modulating pump power minimizes optical path differences in the gain medium.

3. A high power solid state laser system as defined in claim 1, wherein:
the at least one array of light sources comprises a main array of light sources and an auxiliary array of light sources; and
the means for spatially modulating pump power comprises means for modulating the light output from the auxiliary array of light sources.

4. A high power solid state laser system as defined in claim 3, wherein the means for modulating the light output from the auxiliary array of light sources comprises at least one beam deflector, for deflecting output from at least part of the auxiliary array.

5. A high power solid state laser system as defined in claim 4, wherein the means for modulating the light output from the auxiliary array of light sources comprises a set of individual controls for modulating light output from selected portions of the auxiliary array.

6. A high power solid state laser system as defined in claim 1 wherein:
the at least one array of light sources comprises a plurality of main arrays of light sources; and
the means for spatially modulating pump power comprises means for selectively deflecting the light output from selected portions of one of the main arrays of light sources.

7. A high power solid state laser system as defined in claim 6, wherein the means for selectively deflecting comprises a plurality of optical rods movable to deflect light output from the selected portions of one of the main arrays of light sources.

8. A high power solid state laser system, comprising:
a slab of solid state gain medium having an end facet into which an input beam is launched and an opposite end facet from which an amplified output beam is emitted;
at least one diode array to provide pump power coupled into the slab of solid state gain medium; and
means for spatially modulating pump power coupled into the slab of solid state gain medium, to compensate for optical aberrations that affect the amplified output beam.

9. A high power solid state laser systems as defined in claim 8, wherein the optical aberrations are caused by thermal non-uniformities in the gain medium and the means for spatially modulating pump power minimizes optical path differences in the gain medium.

10. A high power solid state laser system as defined in claim 8, wherein:
the at least one diode array comprises a main diode array and an auxiliary diode array; and
the means for spatially modulating pump power comprises means for modulating the light output from the auxiliary diode array.

11. A high power solid state laser system as defined in claim 10, wherein the means for modulating the light output from the auxiliary diode array comprises at least one beam deflector, for deflecting output from at least part of the auxiliary diode array.

12. A high power solid state laser system as defined in claim 11, wherein the means for modulating the light output from the auxiliary diode array comprises a set of individual controls for modulating light output from selected portions of the auxiliary diode array.

13. A high power solid state laser system as defined in claim 8, wherein:
the at least one diode array comprises a plurality of main diode arrays; and
the means for spatially modulating pump power comprises means for selectively deflecting the light output from selected portions of one of the main diode arrays.

14. A high power solid state laser system as defined in claim 13, wherein the means for selectively deflecting comprises a plurality of optical rods movable to deflect light output from the selected portions of one of the main diode arrays.

15. A method for reducing thermo-optic effects in a high power solid state laser, the method comprising:
launching an input beam into a solid state gain medium;
amplifying the input beam in the solid state gain medium;
outputting the amplified beam from an aperture in the solid state gain medium;
coupling pump power into the solid state gain medium from at least one array of diodes;
detecting optical path differences across the aperture of the solid state gain medium or across the aperture of the amplified output beam; and
selectively modulating the amount of pump power coupled to the solid state laser, to compensate for the detected optical path differences.

16. A method as defined in claim 14, wherein:
the step of coupling pump power employs a main diode array and an auxiliary diode array; and
the step of selectively modulating modulates the power of selected portions of the auxiliary diode array.

17. A method as defined in claim 16, wherein the step of selectively modulating comprises moving at least one beam blocker to block or deflect light from at least one portion of the auxiliary diode array.

18. A method as defined in claim 15, wherein the step of selectively modulating comprises separately controlling diodes in the auxiliary diode array.

19. A method as defined in claim 15, wherein:
the step of coupling pump power employs a plurality of main diode arrays; and
the step of selectively modulating modulates the power of selected portions of one of the main diode arrays.
